(19) **Europäisches Patentamt**

**European Patent Office**

**Office européen des brevets**

(11) Veröffentlichungsnummer: **0 289 528 B1**

(12) **EUROPÄISCHE PATENTSCHRIFT**

(45) Veröffentlichungstag der Patentschrift: **06.07.94**

(21) Anmeldenummer: **87906165.3**

(22) Anmeldetag: **30.09.87**

(86) Internationale Anmeldenummer:
**PCT/DE87/00445**

(87) Internationale Veröffentlichungsnummer:
**WO 88/03460 (19.05.88 88/11)**

(51) Int. Cl.⁵: **B24B 49/00**, G05B 19/42,
G05B 19/18

(54) **VERFAHREN UND VORRICHTUNG ZUM TIEFSCHLEIFEN.**

(30) Priorität: **05.11.86 DE 3637758**

(43) Veröffentlichungstag der Anmeldung:
**09.11.88 Patentblatt 88/45**

(45) Bekanntmachung des Hinweises auf die
Patenterteilung:
**06.07.94 Patentblatt 94/27**

(84) Benannte Vertragsstaaten:
**CH DE FR GB LI**

(56) Entgegenhaltungen:
EP-A- 0 074 855      EP-A- 0 175 168
DE-A- 2 742 267      DE-A- 2 934 658
DE-A- 3 008 566      GB-A- 2 122 518
US-A- 3 984 213      US-A- 4 014 142
US-A- 4 531 192

Patent Abstracts of Japan,vol. 7, no. 79 (M-204)(1224), 31 March 1983, & JP-A-584355 (TOYOTA JIDOSHA KOGYO K.K.).

Manfred Weck : "Werkzeugmaschinen", vol 3, "Automatisierung und Steuerungstechnik", 1978, VDI-Verlag, (Düsseldorf, DE), see pages 315,319.

VDI-Zeitschrift, Band 127, Nr. 12, Juni 1985, Düsseldorf DE, H-H- Damlos : "Tief-und Pendelschleifen von Profilen", Seiten 436-437

VDI-Zeitschrift, Band 128, Nr. 22, November 1986, Düsseldorf DE, E. Saljé et al. : "Ow-Messgerät für das Aussenrund. und Innenrund.Einstechschleifen" Seiten 884-886

(73) Patentinhaber: **Saljé, Ernst
Schulheide 4
D-21227 Bendestorf(DE)**

(72) Erfinder: **Saljé, Ernst
Schulheide 4
D-21227 Bendestorf(DE)**

(74) Vertreter: **Zapfe, Hans, Dipl.-Ing.
Am Eichwald 7
Postfach 20 01 51
D-63136 Heusenstamm (DE)**

EP 0 289 528 B1

EP 0 289 528 B1

**Beschreibung**

Die Erfindung bezieht sich auf ein Verfahren zum Tiefschleifen von Werkstücken auf mit Bearbeitungsstation und Meßstation sowie Rechner und Bahnsteuerung wenigstens in der X-Achse und der Y-Achse ausgestatteten Flach-Schleifmaschinen mit Umfangs-Schleifscheiben, wobei das jeweilige Werkstück in einer auf einem beweglichen Träger befindlichen Spannvorrichtung gehalten wird, und auf eine Vorrichtung zur Durchführung des Verfahrens nach dem Oberbegriff des Patentanspruchs 1.

Beim Tiefschleifen wird die Schleifscheibe um einen bestimmten Betrag zugestellt, und es wird dann die Bearbeitung über die Länge des Werkstücks hinweg mit einer Vorschubbewegung ausgeführt.

Gegossene und geschmiedete Rohteile, aber auch mit Schruppvorgängen spanend grob vorbearbeitete Werkstücke weisen ungleichmäßige Bearbeitungszugaben beträchtlichen Ausmaßes auf. Bisher mußten solche Werkstücke beim sog. Pendelschleifen in entsprechend vielen schlecht ausgenutzten Hüben mit kleinen Zerspanvolumen vorgeschliffen werden. Erst wenn die Schleifscheibe auf ganzer Werkstücklänge im Eingriff war, konnte der Tiefenvorschub bzw. die Zustellung eingestellt werden. Als Folge des vorsichtigen Heranfahrens an das Werkstück ging dabei viel Zeit verloren.

In der DD-210 640 ist beim Pendelschleifen vorgeschlagen worden, das Schleifaufmaß an den einzelnen Werkstücken zu ermitteln und die Spanne im Aufmaß zwischen einem Maximalwert und einem Minimalwert in mehrere Gruppen einzuteilen. Für jede dieser Werkstückgruppen ist in einem Rechner ein bestimmter Schleifzyklus vorgesehen, der dann von der Maschine ausgeführt wird. Es handelt sich also nur darum, je nach der Größe des Aufmaßes eines Werkstückes einen fest vorprogrammierten Arbeitsablauf auszulösen.

Doch auch beim Tiefschleifen ergeben große und ungleichmäßige Bearbeitungszugaben Probleme. Die Zustellung bzw. die Schnittiefe kann nur abhängig von der örtlich verschiedenen maximalen Bearbeitungszugabe eingestellt werden. Um zulässige Zeitspanvolumen, Werkstücktemperaturen oder Schleifkräfte nicht zu überschreiten, sind dabei die Vorschubgeschwindigkeiten auf maximal zu erwartende, unbekannte Bearbeitungszugaben einzustellen. Auch beim Tiefschleifen geht somit durch vorsichtiges Einstellen der Zustellung bzw. Schnittiefe Zeit verloren. Unter Beachtung des Quotienten aus ungleichmäßger Bearbeitungszugabe zu Schnittiefe mag das Tiefschleifen gegenüber dem Pendelschleifen in Bezug auf die angesprochene Problematik günstiger erscheinen. Es ist jedoch zu berücksichtigen, daß durch unterschiedliche unbekannte Bearbeitungszugaben unter sonst konstanten Bedingungen auch die Normalkräfte zwischen Schleifscheibe und Werkstück den Bearbeitungszugaben entsprechend schwanken. Dies führt zwangsläufig zu ungleichmäßigen Auffederungen. Werkstückfehler in Bezug auf Geradlinigkeit oder Ebenheit sind die Folge. Nur durch zusätzliche Schleifzeiten lassen sie sich eliminieren.

Zur Schleifbearbeitung einer Preßform ist in Patent Abstracts of Japan, Bd. 7, Nr. 79 (M-204)(1224), 31. März 1983, & JP-A-58-4355 vorgesehen, ein Werkstück mit einem Meßapparat auszumessen und die Meßwerte in einen Speicher eines Rechners einzugeben, wo sie mit darin enthaltenen oder zu erstellenden Werten, über deren Natur und Zustandekommen sonst nichts gesagt ist, verglichen werden sollen. Das Ergebnis kann auf einem Farb-Monitor sichtbar gemacht oder von einem Plotter gezeichnet werden. Es soll dann abgerufen werden können, wenn ein Schleifvorgang mittels eines als Schleif-Roboter bezeichneten Aggregats auszuführen ist.

Aufgabe der Erfindung ist es, ein Verfahren der eingangs genannten Art anzugeben, durch das Werkstücke mit unterschiedlichen Bearbeitungszugaben über die Länge der zu schleifenden Seite hinweg oder auch von Werkstück zu Werkstück günstig im Tiefschleifen bearbeitet werden können, ohne daß als zulässig erachtete Parameter, z.B. der vorstehend angesprochenen Art, dabei überschritten werden, um dadurch bisher bestehende Nachteile bzw. Unzulänglichkeiten, wie sie weiter oben geschildert wurden, so weit wie möglich zu beheben. Dabei sollen möglichst fehlerfreie Werte für die Steuerung des Schleifvorganges zur Verfügung gestellt werden. Mit der Erfindung soll ferner eine vorteilhafte Vorrichtung zur Durchführung des Verfahrens geschaffen werden. Die Erfindung strebt dabei auch eine günstige Ausbildung und Anordnung einer solchen Vorrichtung im einzelnen an.

Die Erfindung kennzeichnet sich dadurch, daß bei einem Verfahren der eingangs genannten Art vor dem Schleifvorgang in der Meßstation die Kontur der zu schleifenden Fläche des Werkstückes wenigstens an einzelnen Stellen ihrer Länge maßlich mit Bezug auf eine Meßbasis ermittelt wird, wobei die Meßwerte im Rechner gespeichert werden, daß im Zusammenhang mit der Messung der Werkstückkontur die Lage von Referenzflächen der Spannvorrichtung relativ zur Meßbasis gemessen wird und bei Abweichungen von einer Soll-Lage die Fehlerwerte zur Berücksichtigung in den Rechner gegeben werden, und daß der Schleifvorgang nach Bewegung der Spannvorrichtung mittels des als Teil der Schleifmaschine ausgebildeten Trägers in in die Bearbeitungsstation entsprechend den ggfs. korrigierten Kontur-Meßwerten unter Berücksichtigung wenigstens einer im Rechner vorgebbaren technologischen Größe mittels der Bahnsteue-

2

rung durchgeführt wird.

Als technologische Größe können verschiedene, für den Schleifvorgang wichtige Parameter gewählt werden, so bestimmte Schleifkräfte oder Temperaturen. Besonders vorteilhaft wird als technologische Größe, die im Rechner vorzugeben ist, ein konstantes Zeitspanvolumen gewählt.

Bei dem Verfahren ist es besonders günstig, einen Meßvorgang an einem Werkstück auszuführen, während ein zuvor gemessenes Werkstück geschliffen wird. Dadurch kann eine bedeutende Zeitersparnis erzielt werden.

Mit dem angegebenen Verfahren läßt sich eine Schleifbearbeitung im Tiefschleifen auch bei solchen Werkstücken wirtschaftlich durchführen, bei denen unterschiedliche Aufmaße oder Bearbeitungszugaben vorhanden sind. Dazu werden nachstehend auch im speziellen Teil der Beschreibung noch weitere Erläuterungen gegeben.

Dadurch, daß mit der Messung der Werkstückkontur auch eine Messung an Referenzflächen vorgenommen wird, ist sichergestellt, daß einwandfreie Werte für die Steuerung des Schleifvorganges zur Verfügung stehen, insbesondere für die Steuerung der Vorschubgeschwindigkeit zum Schleifen mit konstantem Zeitspanvolumen.

Bei dem hier in Rede stehenden Schleifprozeß handelt es sich um das Prinzip des Flachschleifens, d.h. des Schleifens eines Werkstückes in einer Längenabmessung desselben mit dem Umfang der Schleifscheibe, wobei die Schleifscheibenachse quer zur Vorschubbewegung gerichtet ist. Dies umfaßt sowohl Werkstücke, bei denen durch Schleifen eine ebene Fläche erreicht werden soll, als auch Werkstücke, bei denen die zu schleifende Fläche einen gekrümmten Verlauf hat.

Die Angabe der Maschinenachsen entspricht der üblichen Bezeichnung. Die X-Achse gibt normalerweise die Richtung der Vorschubbewegung beim Schleifen an, während die Y-Achse die Richtung der Zustellung bzw. des Tiefenvorschubs ist. Eine Schleifmaschine, die eine Bahnsteuerung für diese beiden Achsen aufweist, kann ein Werkstück im Tiefschleifen so bearbeiten, daß eine Fläche bestimmter Form und Abmessungen erzielt wird.

Wenn in dieser Beschreibung der Ausdruck "Rechner" verwendet wird, so ist darunter jede Datenverarbeitungseinrichtung zu verstehen, welche die angegebenen Funktionen erfüllen kann. Solche Einrichtungen stehen dem Fachmann zusammen mit ihren Steuer- und Programmiermöglichkeiten zur Verfügung.

Das zu schleifende Werkstück wird üblicherweise in einer Spannvorrichtung gehalten, die sich auf einem Träger befindet, wobei der letztere insbesondere ein Tisch der Schleifmaschine ist, der eine Längsbewegung ausführen kann oder der als Teiltisch od.dgl. ausgebildet ist und sich um eine mittlere Achse drehen kann.

Die Erfindung sieht weiterhin eine Vorrichtung zur Durchführung des Verfahrens mit den Merkmalen des Patentanspuchs 4 vor.

Die Meßvorrichtung weist wenigstens einen Meßkopf oder Meßtaster zur Erfassung von Kontur-Werten des Werkstückes und zur Ermittlung der Lage einer Referenzfläche der Spannvorrichtung auf und ist über Signalleitungen funktionsmäßig mit einem Rechner zur Steuerung der Schleifmaschine verbunden.

Der Werkstückträger ist zum Überführen des Werkstückes aus der Meßstation in eine Bearbeitungsstation an der Schleifmaschine eingerichtet. Dies ermöglicht es u.a. in sehr günstiger Weise auch, ein Werkstück zu messen und gleichzeitig ein zuvor gemessenes Werkstück zu schleifen. Es sind verschiedene Anordnungen und Ausbildungen möglich, die im einzelnen noch erläutert werden.

Die Vorrichtung kann eine Anzahl von feststehend angeordneten Meßköpfen aufweisen, die an einer Halterung so einstellbar sind, daß entsprechend dem jeweiligen Werkstück eine Abtastung und Erfassung von Maßen an verschiedenen Stellen des Werkstückes möglich ist. Dies gilt besonders für in Längsrichtung des Werkstückes, also in Vorschubrichtung beim Schleifen, liegende Punkte oder Bereiche, kann aber auch quer dazu der Fall sein.

Es liegt weiterhin im Rahmen der Erfindung, nicht nur eine Ein- oder Mehrkoordinatenmessung an einzelnen Stellen durchzuführen, sondern einen Meßkopf oder ein Tastsystem auf einer vorgegebenen Bahn, in erster Linie in Längsrichtung des Werkstückes, zu führen und dabei eine kontinuierliche Maßerfassung, zumindest bereichsweise, durchzuführen.

Ungeachtet der einen oder anderen genannten Ausführung ist vorteilhaft wenigstens ein Meßkopf, Tastsystem od.dgl. einer Referenzfläche der Spannvorrichtung zugeordnet, um die Lage der letzteren zu überprüfen und etwaige Lagefehler zu messen und entsprechende Werte zur Korrektur in den Rechner einzugeben.

Bei besonders hohen Anforderungen an die Genauigkeit können wichtige Teile der Meßvorrichtung so ausgebildet sein, daß Wärmedeformationen zumindest weitgehend ausgeschlossen sind. Dazu bestehen mehrere Möglichkeiten. So können wichtige Teile der Meßvorrichtung aus temperaturunempfindlichem Material bestehen, z.B. Invar. Die Meßvorrichtung kann aber auch mit einer Temperaturregeleinrichtung ausgerüstet sein, etwa derart, daß eine Halterung oder Führung für Meßköpfe oder Tastsysteme mit Hilfe von Temperaturfühlern und Heizelementen auf konstante Temperatur geregelt werden.

Weitere Einzelheiten der Erfindung ergeben sich aus der nachstehenden Erläuterung von Ausführungsbeispielen, aus der zugehörigen Zeichnung und aus den Ansprüchen.

Kurze Beschreibung der Zeichnung

Es zeigen:

| | |
|---|---|
| Fig. 1 | eine Schleifmaschine mit der erfindungsgemäßen Vorrichtung in perspektivischer, teils schematischer Darstellung, |
| Fig. 2 | ein Schaubild zur Veranschaulichung der Koordinaten, |
| Fig. 3 | eine schematische Darstellung des Schleifens einer gekrümmten Fläche, |
| Fig. 4 | eine Ausführung einer Meßvorrichtung in Vorderansicht, |
| Fig. 5 | einen Schnitt nach der Linie V - V in Fig.4, |
| Fig. 6 | eine abgewandelte Ausführung der Meßvorrichtung, |
| Fig. 7 und 8 | Darstellungen zur Erläuterung der Werkstückvermessung, |
| Fig. 9 | schematisch eine weitere Darstellung einer Meßvorrichtung, |
| Fig. 10 | einen translatorisch bewegbaren Werkstückträger, |
| Fig. 11 | einen um eine vertikale Achse schwenkbaren Werkstückträger und |
| Fig. 12 | einen um eine horizontale Achse schwenkbaren Werkstückträger. |

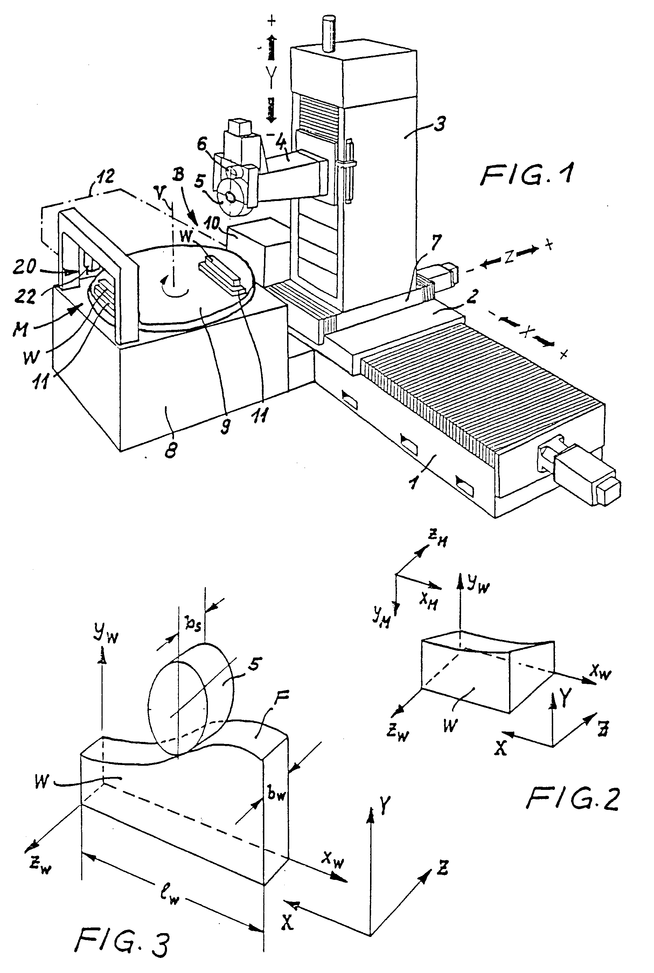

Bei der in Fig. 1 gezeigten Schleifmaschine ist auf einem Bett 1 ein Längsschlitten 2 in Richtung der X-Achse mittels steuerbaren Antriebs verschiebbar. An einem Ständer 3 ist ein Spindelstock 4 mit darin gelagerter Schleifspindel in Richtung der Y-Achse mittels gesteuerten Antriebs verschiebbar. Die Schleifspindel trägt am vorderen Ende eine auswechselbare Schleifscheibe 5. Mit der Zahl 6 ist eine Abrichtrolle bezeichnet, die auch mittels gesteuerten Antriebs an die Schleifscheibe 5 angestellt bzw. mit dieser in ständigem Kontakt gehalten werden kann, so bei der Methode des sog. continuous dressing. Der Ständer 3 kann fest auf dem Längsschlitten 2 montiert sein oder, wie bei der dargestellten Maschine, auf einem Querschlitten 7 angeordnet sein, der vom Längsschlitten 2 getragen ist und sich auf Führungen desselben in Richtung der Z-Achse mittels steuerbaren Antriebs verfahren läßt.

Mit dem Bett 1 ist ein Untersatz 8 fest verbunden, auf dem ein Schalttisch 9 gelagert ist, derart, daß er um eine vertikale Achse V mittels steuerbaren Antriebs um bestimmte Winkel, insbesondere 180°, gedreht werden kann.

Mit der Zahl 10 ist ein Schaltschrank od.dgl. bezeichnet, in dem sich ein Rechner mit allen Einrichtungen für eine numerische Bahnsteuerung des Längsschlittens 2 in der X-Achse und des Spindelstockes 4 in der Y-Achse befinden. Außerdem kann auch für die Bewegung des Querschlittens 7 in der Z-Achse eine Bahnsteuerung vorgesehen sein.

Auf dem im vorliegenden Fall vom Schalttisch 9 gebildeten Werkstückträger befinden sich wenigstens zwei Spannvorrichtungen 11 zur jeweiligen Aufnahme eines Werkstückes W, das auf seiner Oberseite mittels der Schleifscheibe 5 durch Tiefschleifen zu bearbeiten ist.

Mit der Zahl 20 ist schematisch eine unabhängig vom Werkstückträger auf dem festen Untersatz 8 angeordnete Meßvorrichtung bezeichnet, die in der Lage ist, die zu schleifende Fläche eines Werkstückes W vor der Bearbeitung zumindest an einigen Stellen abzutasten und in den Maßen mit Bezug auf eine Meßbasis zu erfassen.

Die Meßvorrichtung 20 und der Schalttisch 9 sind zueinander und relativ zur Schleifmaschine so angeordnet, daß jeweils ein Werkstück W aus einer Meßstation M, in der es abgetastet werden kann, in eine Bearbeitungsstation B, in der es geschliffen wird, durch Drehung des Schalttisches 9 um 180° überführt werden kann.

Die Meßstation M kann dabei gleichzeitig auch Ladestation sein, in der ein neues Werkstück in die Spannvorrichtung 11 eingelegt und nach der Bearbeitung aus dieser wieder herausgenommen werden kann. Es ist aber auch möglich, eine besondere Ladestation im Winkelbereich zwischen der Meßstation M und der Bearbeitungstation B vorzusehen, beispielsweise in einer Zwischenstellung des Schalttisches 9, die einer Drehung um 90° entspricht. Weiterhin kann die Anordnung so getroffen werden, daß sich eine Meßstation, eine Bearbeitungsstation und eine Ladestation an jeweils um 120° zueinander versetzten Stellen befinden. Darüber hinaus sind auch noch andere Ausführungen möglich.

Außer den Bezeichnungen der Maschinenachsen, in denen die Zustell- und Vorschubbewegungen erfolgen können, seien zum Zweck der besseren Erläuterung auch für die Meßvorrichtung 20 mit ihrem Bewegungssystem und für das Werkstück entsprechende Koordinaten gewählt, wie Fig. 2 verdeutlicht. Die auf das Meßsystem bezogenen Achsen $x_M$, $y_M$, $z_M$ sind mit dem Index M und die auf das Werkstück bezogenen Achsen $x_W$, $y_W$, $z_W$ mit W bezeichnet.

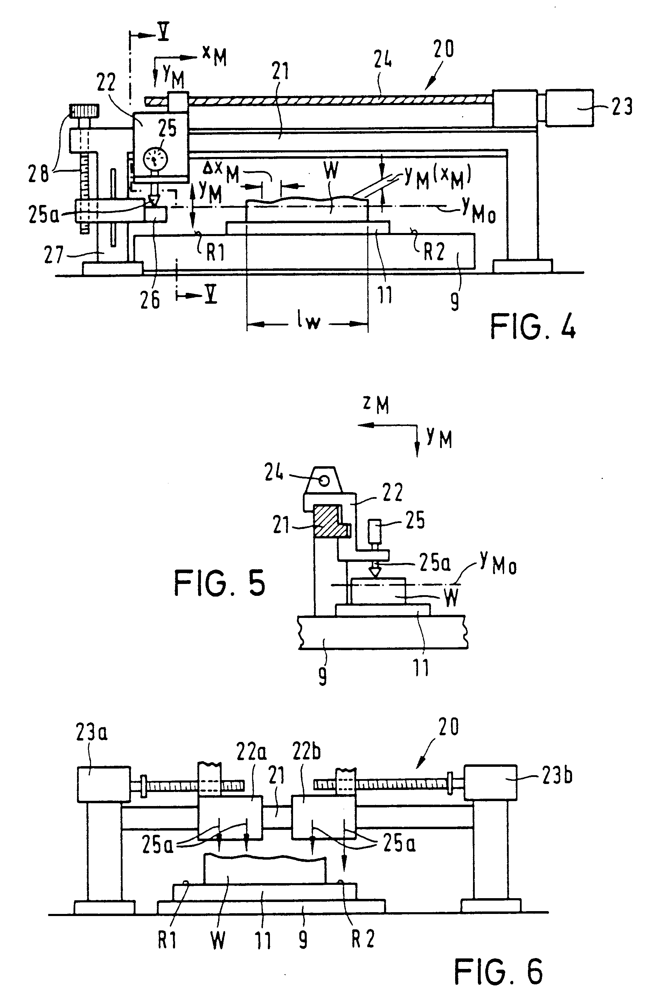

Fig. 3 zeigt ein Werkstück W mit einer zu schleifenden Fläche F, deren Verlauf sich in der Achse $x_W$ - (Längsrichtung des Werkstückes) in Richtung der Achse $y_W$ ändert. Die Werkstücklänge ist mit $l_W$, die Werkstückbreite mit $b_W$ und die Breite der Schleifscheibe 5 mit $b_S$ bezeichnet.

Die in den Fig. 4 und 5 zum Teil schematisch wiedergegebene Meßvorrichtung 20 ist im wesentlichen brückenartig ausgebildet und weist eine genaue Längsführung 21 auf, an der ein Meßkopf 22 in Form eines Schlittens mittels eines Vorschubmotors 23 und einer Genauigkeitsspindel 24 in der Achse $x_M$ verschiebbar ist. Am Meßschlitten 22 befindet sich wenigstens ein Tastsystem 25, das hier zur Veranschlaulichung als Längentaster mit Meßuhranzeige dargestellt ist. Es stehen moderne Tastsysteme zur Verfügung, bei denen das Aufsetzen des Taststiftes 25a oder eines entsprechenden Elements und dessen Abhebebewegung automatisch ausführbar sind und bei denen eine Fernübertragung der Meßwerte in Form elektrischer Signale erfolgt. Dies ist auch hier der Fall, wobei die Signalleitungen nicht besonders dargestellt sind. In Fig. 1 ist schematisch eine Signalübertragungsleitung von der Meßvorrichtung 20 zur Steuerung im Schrank 10 bei der Zahl 12 angedeutet.

In Fig. 4 ist der Schlitten 22 mit dem Tastsystem 25 in einer Position gezeigt, in welcher der Taststift 25a auf einer als Meßbasis dienenden Fläche eines einstellbaren Anschlages 26 aufliegt. Damit ist eine Einstellung des Nullpunktes des Meßsystems gegeben. Der Anschlag 26 kann in der $y_M$-Richtung am Ständerteil 27 der Meßvorrichtung mittels eines Spindeltriebs 28 od.dgl. verstellt werden.

Von dieser Ausgangslage des Meßsystems, die als Koordinaten-Nullpunkt $y_{Mo}$ des Meßweges $y_M$ aufgefaßt werden kann, erfolgt die Bewegung des Meßschlittens 22 über das Werkstück W hinweg. Es kann dabei die Kontur des Werkstückes in bestimmten Weginkrementen $\Delta x_M$ Punkt für Punkt aufgenommen werden. Die so gemessene Werkstückkontur wird sodann abgespeichert. Statt einer Abtastung der Kontur jeweils an einzelnen Stellen kann auch eine kontinuierliche Abtastung erfolgen.

In Fig. 6 ist schematisch eine Meßvorrichtung dargestellt, bei der zwei an einer Längsführung 21 separat mit Vorschubantrieben 23a und 23b verschiebbare Meßköpfe 22a und 22b vorhanden sind. Jeder Meßkopf kann dabei auch mehrere Tastsysteme 25a bzw. 25b haben. Auch der Meßkopf 22 bei der Ausführung nach Fig. 4 kann mit mehreren Tastsystemen ausgestattet sein.

Es bestehen darüber hinaus noch andere Möglichkeiten für die Gestaltung der Meßvorrichtung im einzelnen. Im Prinzip lassen sich beliebig geformte Werkstücke ausmessen. Auch profilierte Konturen, die sich als Funktion von $x_M$, $y_M$ oder auch $z_M$ darstellen lassen, sind erfaßbar. Es können insbesondere mehrere Meßtaster in verschiedenen $z_W$-Koordinaten eingesetzt werden.

Bei Werkstücken, die in der Werkstückachse $z_W$ eine Kontur aufweisen, die von der Gleichung $y_W$ = konst. abweicht, lassen sich Schleifscheiben mit entsprechend gekrümmten aktiven Profilen einsetzen. Gerade Schleifscheiben sind bei Krümmungen in der Werkstückfläche $y_W$ = $f(x_W)$ einsetzbar. Für die Steuerung der Schleifbearbeitung wird eine Schleifmaschine mit einer zweiachsigen NC-Bahnsteuerung in der X- und der Y-Maschinenachse verwendet.

Bei einer bevorzugten Verfahrensweise wird mit einem bestimmten konstanten Zeitspanvolumen gearbeitet, wozu aus den Meßwerten $y_M$ = $f(x_M)$ die von der Steuerung zu bewirkende Vorschubgeschwindigkeit berechnet wird.

Bei konstantem Zeitspanvolumen längs des Maschinen-Vorschubweges über die Werkstücklänge $l_W$, d.h. in der Maschinenachse X, gilt:

$$Q_W = b_s \cdot f_r(x_M) \cdot v_{ft}(x_M) = \text{konst.}$$

Dabei sind:

$Q_W$ = Zeitspanvolumen
$b_s$ = Schleifscheibenbreite
$f_r(x_M)$ = Zustellung
$v_{ft}(y_M)$ = Vorschubgeschwindigkeit als Funktion des Meßweges $x_M$. Der Meßweg $x_M$ ist identisch mit dem Maschinenvorschubweg - x.

Die Zustellung $f_r(x_M)$ kann bei geraden Werkstückkonturen mit dem Meßwert $y_M$ der Meßvorrichtung identisch sein, wenn die Höhe der Meßbasis zuvor entsprechend eingestellt wurde. Die Gleichung läßt sich nun schreiben:

$$Q_W = \text{konstant} = b_s \cdot y_M(x_M) \cdot v_{ft}(x_M)$$

oder

$$v_{ft}(x_M) = \frac{Q_W}{b_s \cdot y_M(x_M)} = \frac{konstant}{b_s \cdot y_M(x_M)}$$

Handelt es sich bei einem um 180° schwenkbaren Werkstückträger, wie es z.B. bei der Ausführung nach Fig. 1 zwischen der Meßstation M und der Bearbeitungsstation B der Fall ist, so entspricht die Abtastrichtung des Meßtasters z.B. in positiver $x_M$-Meßkoordinate einem Vorschubweg in negativer Maschinen-Koordinatenrichtung -X.

Bei breiteren Werkstücken mit in der $z_W$-Werkstückachse unterschiedlichen Bearbeitungszugaben kann in die obige Gleichung anstelle des Meßwertes

$$y_M(\dot{x}_M)$$

der entsprechendem Mittelwert

$$\overline{y}_M(x_M)$$

eingesetzt werden. Diesen Mittelwert erhält man aus mehreren Meßwerten $y_{M1}$, $y_{M2}$ ... als Funktion des Verschiebeweges $x_M$. Die Meßvorrichtung enthält für einen solchen Fall insbesondere mehrere Taster in gleicher Meßwegachse $x_M$, und zwar parallel zueinander in verschiedenen Koordinaten $z_W$.

Vorteilhaft ist die Meßvorrichtung 20 zumindest in ihren wesentlichen Teilen, besonders das Gestell, so ausgeführt, daß sie keine eigenen Wärmedeformationen erleidet: Dies läßt sich u.a. dadurch erreichen, daß die betreffenden Teile aus entsprechendem Material bestehen, etwa Invar. Die Meßvorrichtung kann aber auch mit einer Einrichtung ausgerüstet sein, die ihre Temperatur durch Regelung unter Verwendung geeigneter Heizelemente oder Medien konstant hält. Es gelten dazu alle Hinweise und Angaben, wie sie aus der DE-OS 32 21 381 für den Fachmann entnehmbar sind.

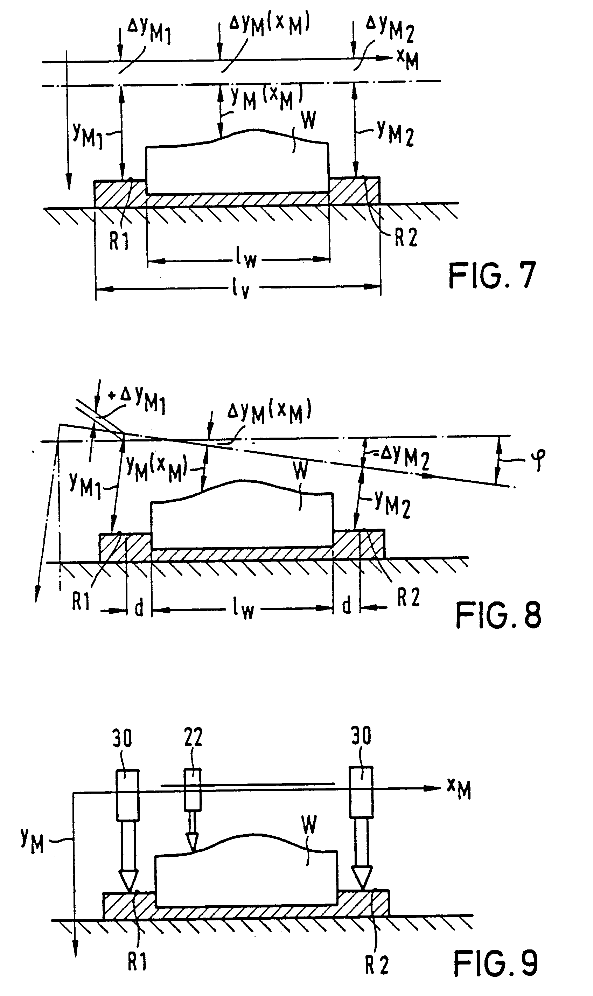

Eine andere vorteilhafte Maßnahme, um Fehler bei der Messung auszuschalten, besteht darin, daß die Lage wenigstens einer an einer Werkstück-Spannvorrichtung vorgesehenen Referenzfläche mit Bezug auf das Meßgestell bzw. auf die Meßbasis gemessen wird. Solche Referenzflächen sind in den Fig. 4 sowie 7 bis 9 jeweils mit den Buchstaben R1, R2 bezeichnet. Zu diesen Referenzflächen steht das Werkstück in festem Bezug, was beim Ausrichten und Einspannen des Werkstückes in die Spannvorrichtung realisiert wird. Innerhalb der Referenzflächen können bestimmte, vorher festzulegende und von den jeweiligen Abmessungen des Werkstücks und der Spannvorrichtung abhängende diskrete Positionen $x_{M1}$ und $x_{M2}$ gewählt werden. Es werden die dazu gehörenden Höhen $x_{M1}$ und $x_{M2}$ gemessen. Dies kann entweder durch einen Meßkopf 22 erfolgen, der auch zur Werkstückabtastung benutzt wird, wobei dann der Meßbereich des Tastsystems entsprechend groß ist oder auch eine Verstellmöglichkeit vorgesehen wird, oder auch durch gesonderte Meßtaster 30, mit denen die Meßvorrichtung ausgestattet ist, wie Fig. 9 schematisch veranschaulicht.

Durch die Messung läßt sich erkennen, ob Aufspannfehler der Spannvorrichtung oder Führungsfehler in der Längsführung der Meßvorrichtung in der Lage zum Werkstück vorhanden sind oder nicht. Anhand der Fig. 7 und 8 läßt sich dies erläutern.

Ein Meßsignal $y_{M1}$ = $y_{M2}$ bedeutet, daß Parallelität zwischen Längsführung und Spannvorrichtung, d.h. Werkstückbasis, vorliegt. Dagegen bedeutet ein Meßsignal $y_{M1} \neq y_{M2}$, daß entweder die Längsführung oder die Spannvorrichtung oder beide zum Meßkoordinatensystem einen Winkelfehler

$$\varphi \sim \frac{y_{M1} - y_{M2}}{l_W}$$

EP 0 289 528 B1

besitzen.

Wenn der Fehlerwinkel berechnet werden kann, lassen sich auch die Meßwerte $y_M = f(x_M)$ korrigieren und danach die Werte für die Steuerung der Vorschubgeschwindigkeit zum Schleifen mit konstantem Zeitspanvolumen vorgeben.

Bei dem in Fig. 7 dargestellten Fall hat sich die Längsführung des Meßkopfes der Meßvorrichtung in der $y_M$-Koordinate verändert. Gegenüber einer fehlerfreien, strichpunktiert eingezeichneten Ausgangslage hat sich eine Vertikalverschiebung um $\Delta y_{M1} = \Delta y_{M2}$ ergeben. Daraus erhält man die Koordinate des Werkstückes zu $y_M(x_M) + \Delta y_M(x_M)$.

Bei dem in Fig. 8 dargestellten Fall ist angenommen, daß sich die Längsführung um den Winkel verdreht und um einen bestimmten Betrag verschoben hat. Die Kontrolle an den Referenzpunkten R1 und R2 ergibt nun Abweichungen $\Delta y_{M1}$ und $\Delta y_{M2}$ und somit den Winkel $\phi$ zu:

$$= \arctan \frac{/\Delta y_{M1}/ \; - \; /\Delta y_{M2}/}{l_w + 2d}$$

Dabei ist d jeweils der Abstand der Referenzpunkte R1 und R2 vom Werkstück mit der Länge $l_W$.

Die Koordinate $y_M(x_{xM})$ ist nun im Prozeßrechner zu ermitteln. Die wirkliche Koordinate ergibt sich, wenn mit $\Delta y_M(x_M)$ und $y_M(x_M) \cdot \tan\phi$ korrigiert wird.

Dieses Meßprinzip zur Erkennung und zum Ausgleich von Fehlern läßt sich auch dann anwenden, wenn statt eines Meßtastervorschubweges von mindestens $l_v$ nur ein Verschiebeweg $l_w$ verfügbar ist. Es sind dann z.B. drei Meßtaster erforderlich, von denen einer verschiebbar und zwei fest in $x_M$-Achse angeordnet sind.

Beim Zuführen von Werkstück W und Spannvorrichtung 11 auf einen Werkstückträger, etwa den Schwenk- oder Schalttisch 9 bei der Ausführung nach Fig. 1, sind alle Taster der Meßvorrichtung 20 automatisch zurückgezogen, so daß eine Kollision vermieden wird. Wenn die Spannvorrichtung, die insbesondere auch die Form einer automatisch heranfahrbaren Palette od.dgl. haben kann, auf dem Schwenktisch mittels einer nicht dargestellten, aber dem Fachmann zur Verfügung stehenden Klemmeinrichtung befestigt wird, kann in Abhängigkeit von diesem Vorgang ein Steuerungssignal gegeben werden, welches das Einfahren der Taster der Meßvorrichtung 20 in die Meßposition auslöst. Ein Abheben der Taster vom Werkstück bzw. von der Spannvorrichtung kann automatisch am Ende des Meßvorganges bewirkt werden oder auch durch ein Signal, das automatisch gegeben wird, bevor der Schwenktisch 9 um 180° gedreht wird.

Anstelle eines Schwenktisches od.dgl. kann auch ein anderer Werkstückträger verwendet werden, um das Werkstück aus einer Meßstation im Bereich der Schleifmaschine oder auch außerhalb einer solchen zur Bearbeitungsstation und zurück zu bringen.

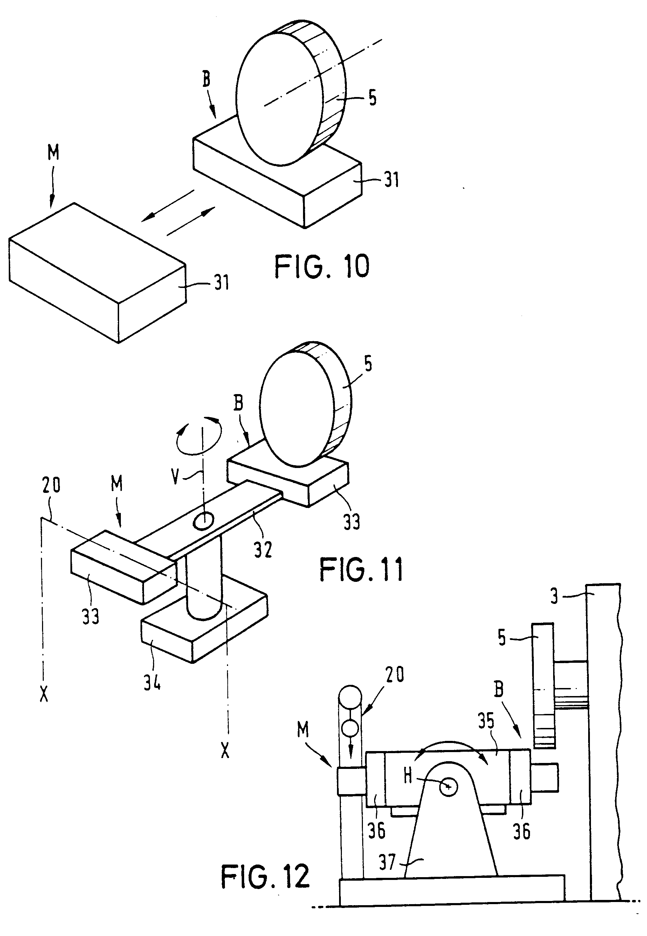

So kann auch eine translatorische Zubringebewegung für einen entsprechend ausgebildeten Werkstückträger 31 vorgesehen sein, wie dies Fig. 10 schematisch veranschaulicht.

Bei rotatorischer Zubringebewegung sind weitere Varianten möglich. Statt eines Rundtakt-Teiltisches lassen sich auch einfachere Schwenkvorrichtungen vorsehen. So zeigt Fig. 11 eine Vorrichtung, bei der an einem Schwenkarm 32, der um eine vertikale Achse V drehbar ist, Werkstückträger 33 angebracht sind. Mit der Zahl 34 ist ein Traggestell für den Schwenkarm 32 bezeichnet. Durch eine strichpunktierte Linie ist die Meßvorrichtung 20 lediglich schematisch angedeutet.

In Fig. 12 ist eine Vorrichtung gezeigt, bei der ein Schwenkarm 35 mit Aufnahmen 36 für Spannvorrichtungen und Werkstücke in einem Gestell 37 um eine horizontale Achse H schwenkbar ist.

## Patentansprüche

**1.** Verfahren zum Tiefschleifen von Werkstücken (W) auf mit Bearbeitungsstation (B) und Meßstation (M) sowie Rechner (10) und Bahnsteuerung wenigstens in der X-Achse und der Y-Achse ausgestatteten Flachschleifmaschinen mit Umfangsschleifscheiben (5), wobei das jeweilige Werkstück (W) in einer auf einem beweglichen Träger (9) befindlichen Spannvorrichtung (11) gehalten wird, gekennzeichnet durch folgende Merkmale:

a) vor dem Schleifvorgang wird in der Meßstation (M) die Kontur der zu schleifenden Fläche (F) des Werkstücks (W) wenigstens an einzelnen Stellen ihrer Länge maßlich mit Bezug auf eine Meßbasis

7

ermittelt, wobei die Meßwerte im Rechner (10) gespeichert werden

b) im Zusammenhang mit der Messung der Werkstückkontur wird die Lage von Referenzflächen (R1, R2) der Spannvorrichtung (11) relativ zur Meßbasis gemessen, und es werden bei Abweichungen von einer Soll-Lage die Fehlerwerte zur Berücksichtigung in den Rechner gegeben, und

c) der Schleifvorgang wird nach Bewegung der Spannvorrichtung (11) mittels des als Teil der Schleifmaschine ausgebildeten Trägers (9) in die Bearbeitungsstation (B) entsprechend den ggf. korrigierten Kontur-Meßwerten unter Berücksichtigung wenigstens einer im Rechner vorgebbaren technologischen Größe mittels der Bahnsteuerung durchgeführt.

2. Verfahren nach Anspruch 1, dadurch gekennzeichnet, daß als technologische Größe ein im wesentlichen konstantes Zeitspanvolumen gewählt wird.

3. Verfahren nach Anspruch 1 oder 2, dadurch gekennzeichnet, daß ein Meßvorgang an einem zu schleifenden Werkstück (W) wenigstens teilweise während der Zeit durchgeführt wird, in der ein anderes, zuvor gemessenes Werkstück (W) geschliffen wird.

4. Vorrichtung zur Durchführung des Tiefschleif-Verfahrens nach einem der Ansprüche 1 bis 3, mit einer Bearbeitungsstation (B) in Form einer wenigstens in der X-Achse und der Y-Achse bahngesteuerten Flachschleifmaschine mit Umfangsschleifscheibe und einem Werkstückträger (9) als Teil der Schleifmaschine mit auf dem Werkstückträger angeordneten Spannvorrichtungen (11) für Werkstücke (W) und mit einer Meßstation (M), an der getrennt vom Werkstückträger (9) und von der Bearbeitungsstation (B) an einem feststehenden Teil (8) eine Meßvorrichtung (20) mit mindestens einem Meßkopf (22, 22a, 22b) angeordnet ist, der bzw. die in der Weise angeordnet ist bzw. sind, daß durch Relativbewegung zwischen Werkstück (W) und dem mindestens einen Meßkopf die Kontur-Werte der zu schleifenden Fläche (F) erfaßbar ist, wobei die Meßvorrichtung (M) über Signalleitungen (12) funktionsmäßig mit einem Rechner (10) zur Steuerung der Schleifmaschine (3, 4) verbunden ist, dadurch gekennzeichnet, daß der Werkstückträger zum Überführen des Werkstücks (W) aus der Meßstation (M) in die Bearbeitungsstation (B) ausgebildet ist und daß jeder Spannvorrichtung (11) mindestens eine individuelle Referenzfläche (R1, R2) zugeordnet ist, die durch Bewegen des Werkstückträgers (9) mit diesem zur Ausführung eines Meßvorgangs in die Meßstation (M) hinein und nach dem Meßvorgang aus dieser heraus bewegbar ist.

5. Vorrichtung nach Anspruch 4, dadurch gekennzeichnet, daß wenigstens ein Meßkopf (22, 22a, 22b) als an einer Führung (21) mittels eines Vorschubmotors (23) verschiebbarer Meßschlitten ausgebildet ist.

6. Vorrichtung nach Anspruch 4 oder 5, dadurch gekennzeichnet, daß ein Meßkopf (25) mit mehreren Meßtastern (25a) ausgestattet ist.

7. Vorrichtung nach einem der Ansprüche 4 bis 6, dadurch gekennzeichnet, daß wenigstens zwei in Querrichtung des Werkstückes (W) Abstand voneinander aufweisende Meßköpfe (22, 30) oder Meßtaster (25) vorgesehen sind.

8. Vorrichtung nach einem der Ansprüche 4 bis 7, dadurch gekennzeichnet, daß wenigstens ein Meßkopf (22, 30) oder Meßtaster (25) zur kontinuierlichen Abtastung einer Werkstückkontur ausgebildet ist.

9. Vorrichtung nach einem der Ansprüche 4 bis 8, dadurch gekennzeichnet, daß die Meßvorrichtung (20) zumindest teilweise unempfindlich gegen Wärmedeformationen ausgebildet ist.

10. Vorrichtung nach Anspruch 4, dadurch gekennzeichnet, daß der Werkstückträger (9) als drehbarer Schalttisch ausgebildet ist.

11. Vorrichtung nach Anspruch 4, gekennzeichnet durch einen translatorisch zwischen der Meßstation (M) und der Bearbeitungsstation (B) bewegbaren Werkstückträger (31).

12. Vorrichtung nach Anspruch 4, dadurch gekennzeichnet, daß der Werkstückträger (33, 36) schwenkbar ausgebildet ist.

**13.** Vorrichtung nach Anspruch 12, dadurch gekennzeichnet, daß die Schwenkachse (V) vertikal angeordnet ist.

**14.** Vorrichtung nach Anspruch 12, dadurch gekennzeichnet, daß die Schwenkachse (H) horizontal angeordnet ist.

**Claims**

**1.** Process for the deep grinding of work pieces (W) on surface grinding machines equipped with machining station (B) and measuring station (M) as well as computer (10) and continuous path control at least in the X axis and the Y axis using circumferential grinding discs (5), the respective work piece (W) being held in a clamping device (11) located on a movable carrier (9), characterised by the following features:

a) prior to the grinding process the contour of the surface (F) to be ground of the work piece (W) is determined in terms of dimensions in the measuring station (M) at least at various points along its length with reference to a baseline, the measured values being stored in the computer (10)

b) in conjunction with the measurement of the work piece contour the position of reference surfaces (R1, R2) of the clamping device (11) is measured relative to the baseline, and in the event of deviations from a specified position, the error values entered into the computer for consideration, and

c) the grinding process is effected by means of the continuous path control after moving the clamping device (11) by means of the carrier (9) designed as part of the grinding machine into the machining station (B) in accordance with the contour measurement values corrected where necessary taking into account at least one technological variable that can be specified in the computer.

**2.** Process according to claim 1 characterised in that an essentially constant rate of metal removal is selected as a technological variable.

**3.** Process according to claim 1 or 2 characterised in that a measuring process on a work piece (W) to be ground is effected at least in part during the time in which another, previously measured work piece (W) is being ground.

**4.** Device for effecting the deep grinding process according to one of the claims 1 to 3 with a machining station (B) in the form of a surface grinding machine with continuous path control in at least the X axis and the Y axis with circumferential grinding disc and a work piece carrier (9) as part of the grinding machine with clamping devices (11) arranged on the work piece carrier for work pieces (W) and with a measuring station (M) on which a measuring device (2) with at least one measuring head (22, 22a, 22b) is arranged separately from the work piece carrier (9) and from the machining station (B) on a stationary part (8), which measuring head or heads is or are arranged such that through relative movement between work piece (W) and the at least one measuring head the contour values of the surface (F) to be ground can be captured, the measuring device (M) being functionally connected via signal wires (12) to a computer (10) for controlling the grinding machine (3, 4), characterised in that the work piece carrier is designed to transfer the work piece (W) from the measuring station (M) into the machining station (B) and in that each clamping device (111) is assigned at least one individual reference surface (R1, R2), which can be moved with the work piece carrier (9) by moving the work piece carrier (9) into the measuring station (M) for carrying out a measuring process and out of it again after the measuring process.

**5.** Device according to claim 4 characterised in that at least one measuring head (22, 22a, 22b) is designed as a measuring carriage that slides along a guide (21) by means of a feed motor (23).

**6.** Device according to claim 4 or 5 characterised in that a measuring head (25) is equipped with several measuring sensors (25a).

**7.** Device according to one of the claims 4 to 6 characterised in that at least two measuring heads (22, 30) or measuring sensors with a distance between them in the transverse direction of the work piece (2) are provided.

8. Device according to one of the claims 4 to 7 characterised in that at least one measuring head (22, 30) or measuring sensor (25) is designed to continually sense the contour of a work piece.

9. Device according to one of the claims 4 to 8 characterised in that the measuring device (20) is designed to be at least partially resistant to heat deformations.

10. Device according to claim 4 characterised in that the work piece carrier (9) is designed as a rotatable indexing table.

11. Device according to claim 4 characterised by a work piece carrier (31) that can be moved in a translatory manner between the measuring station (M) and the machining station (B).

12. Device according to claim 4 characterised in that the work piece carrier (33, 36) can be swivelled.

13. Device according to claim 12 characterised in that the swivel pin (V) is arranged vertically.

14. Device according to claim 12 characterised in that the swivel pin (H) is arranged horizontally.

**Revendications**

1. Procédé pour meuler des objets (W) en profondeur sur une rectifieuse de surface équipée d'une station d'usinage (B) et d'une station de mesure (M) ainsi que d'un ordinateur (10) et d'une commande de déplacement au moins suivant l'axe (X) et l'axe (Y), comprenant des disques de rectification périphériques (5), l'objet considéré (W) étant retenu dans un dispositif de serrage (11) situé sur un support mobile (9), caractérisé par les éléments suivants:
    a) avant l'opération de meulage, on détermine dans la station de mesure (M) le contour de la surface à rectifier (F) de l'objet (W), au moins à des emplacements individuels de sa longueur, par référence à une base de mesure, les valeurs mesurées étant mémorisées dans l'ordinateur (10),
    b) en relation avec la mesure du contour de l'objet, on mesure la situation des surfaces de références (R1, R2) du dispositif de serrage (11) par rapport à la base de mesure, et on introduit dans l'ordinateur les valeurs d'erreur à prendre en compte dans le cas d'écarts par rapport à une position de consigne, et
    c) on procède à l'opération de meulage après déplacement du dispositif de serrage (11) au moyen du support (9), réalisé en tant que partie de la machine de meulage, dans la station d'usinage (B) au moyen de la commande de déplacement et suivant les valeurs de mesure du contour, éventuellement corrigées, en tenant compte d'au moins une grandeur technologique susceptible d'être entrée dans l'ordinateur.

2. Procédé selon la revendication 1, caractérisé en ce que l'on choisit en tant que grandeur technologique un volume de copeaux sensiblement constant dans le temps.

3. Procédé selon l'une ou l'autre des revendications 1 et 2, caractérisé en ce que l'on procède à une opération de mesure sur un objet (W) à meuler au moins partiellement pendant le temps pendant lequel on meule un autre objet (W) mesuré auparavant.

4. Appareil pour la mise en oeuvre du procédé de meulage en profondeur selon l'une des revendications 1 à 3, comprenant une station d'usinage (B) sous la forme d'une machine de rectification à plat commandée en déplacement au moins suivant l'axe X et suivant l'axe Y, avec un disque de meulage périphérique, et un porte-objet (9) en tant que partie de la machine de meulage, et comprenant des dispositifs de serrage (11) agencés sur le porte-objet et destinés à des objets (W), et comprenant une station de mesure (M) sur laquelle est agencé un dispositif de mesure (20) ayant au moins une tête de mesure (22, 22a, 22b) sur une pièce fixe (8), dispositif séparé du porte-objet (9) et de la station d'usinage (B), la ou les têtes de mesures étant agencées de telle manière que par déplacement relatif entre l'objet (W) et ladite au moins une tête de mesure, on peut saisir les valeurs du contour de la surface à meuler (F), le dispositif de mesure (M) étant relié en termes de fonctionnement via des lignes de signal (12) à un ordinateur (10) pour la commande de la machine de meulage (3, 4), caractérisé en ce que le porte-objet est réalisé pour le transfert de l'objet (W) depuis la station de mesure (M) dans la station d'usinage (B), et en ce qu'au moins une surface de référence individuelle (R1, R2) est associée à chaque dispositif de serrage (11), surface de référence qui peut être déplacée par déplacement du porte-objet (9) conjointement avec celui-ci vers l'intérieur de la station de mesure (M) pour exécuter une opération de mesure, et hors de ladite station après l'opération de mesure.

5. Dispositif selon la revendication 4, caractérisé en ce qu'au moins une tête de mesure (22, 22a, 22b) est réalisée sous la forme d'un chariot de mesure déplaçable sur un guide (21) au moyen d'un moteur d'avance (23).

6. Dispositif selon l'une ou l'autre des revendications 4 et 5, caractérisé en ce qu'une tête de mesure (25) est équipée de plusieurs capteurs de mesure (25a).

7. Dispositif selon l'une ou l'autre des revendications 4 et 6, caractérisé en ce qu'il est prévu au moins deux têtes de mesure (22, 30) ou capteurs de mesure (25) à distance l'un de l'autre dans la direction transversale de l'objet (W).

8. Dispositif selon l'une ou l'autre des revendications 4 à 7, caractérisé en ce qu'au moins une tête de mesure (22, 30) ou capteur de mesure (25) est réalisé pour la détection en continu du contour d'un objet.

9. Dispositif selon l'une ou l'autre des revendications 4 à 8, caractérisé en ce que le dispositif de mesure (20) est réalisé au moins partiellement de façon à être insensible aux déformations thermiques.

10. Dispositif selon la revendication 4, caractérisé en ce que le porte-objet (9) est réalisé sous la forme d'une table tournante.

11. Dispositif selon la revendication 4, caractérisé en ce qu'il comprend un porte-objet (31) mobile en translation entre la station de mesure (M) et la station d'usinage (B).

12. Dispositif selon la revendication 4, caractérisé en ce que le porte-objet (33, 36) est réalisé pivotant.

13. Dispositif selon la revendication 12, caractérisé en ce que l'axe de pivotement (V) est disposé verticalement.

14. Dispositif selon la revendication 12, caractérisé en ce que l'axe de pivotement (H) est disposé horizontalement.

FIG.1

FIG.2

FIG.3

EP 0 289 528 B1

FIG. 4

FIG. 5

FIG. 6

13

FIG. 7

FIG. 8

FIG. 9

14

FIG. 10

FIG. 11

FIG. 12